## Europäisches Patentamt

## European Patent Office

## Office européen des brevets

(19)

(11) **EP 1 031 214 B1**

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(21) Anmeldenummer: **98948805.1**

(22) Anmeldetag: **14.08.1998**

(51) Int Cl.⁷: **H04L 12/56**, H04Q 11/04

(86) Internationale Anmeldenummer:
**PCT/DE98/02385**

(87) Internationale Veröffentlichungsnummer:
**WO 99/25100 (20.05.1999 Gazette 1999/20)**

(54) **VERFAHREN ZUM MESSEN VON ATM-ZELLRATEN**

PROCESS FOR MEASURING ATM CELL RATES

METHODE DE MESURE DES TAUX DE CELLULES ATM

(84) Benannte Vertragsstaaten:
**BE CH DE ES FR GB IT LI NL**

(30) Priorität: **07.11.1997 DE 19749390**

(43) Veröffentlichungstag der Anmeldung:
**30.08.2000 Patentblatt 2000/35**

(73) Patentinhaber: **SIEMENS AKTIENGESELLSCHAFT**
**80333 München (DE)**

(72) Erfinder: **HEISS, Herbert**
**D-82008 Unterhaching (DE)**

(56) Entgegenhaltungen:
**EP-A- 0 548 995          EP-A- 0 647 081**

**Beschreibung**

Die Erfindung betrifft ein Verfahren gemäß dem Oberbegriff von Patentanspruch 1.

Rechenverfahren oder Algorithmen zum Messen der Häufigkeit von ATM-Zellen werden beim Stand der Technik häufig verwendet.

Dabei gibt es jedoch das Problem, daß diese Art der Messung meist speziell auf die Verbindung abgestimmt sind. So werden beispielsweise die meisten dieser Messungen innerhalb eines festen Zeitintervalles durchgeführt.

Aus der europäischen Patentanmeldung EP 0548 995 A2 ist eine Überwachungsmethode angesprochen, mit der ankommende ATM-Zellen innerhalb einer vorgegebenen Zeitspanne gemessen werden. Wie allerdings die Verkehrscharakteristik der ATM-Zellen den Messvorgang bestimmt, wird hier nicht angesprochen.

Der Erfindung liegt die Aufgabe zugrunde, einen Weg aufzuzeigen, wie Messungen für ATM-Zellen flexibler durchgeführt werden können.

Vorteilhaft an der Erfindung ist insbesondere, daß die erste Stufe eines zweistufigen Meßverfahrens durch ankommende ATM-Zellen getriggert wird. Vorteilhaft ist weiterhin, daß kein festes Meßzeitintervall vorgesehen ist. Die ATM-Zellen selbst bzw. die Verkehrscharakteristik sind das Kriterium dafür, wann die Messung durchgeführt wird.

Vorteilhafte Weiterbildungen der Erfindung sind in den Unteransprüchen angegeben.

Die Erfindung wird im folgenden anhand eines Ausführungsbeispiels näher erläutert.

Es zeigen:

Figur 1    die erste Sufe des erfindungsgemäßen zweistufigen Meßverfahrens (Hauptteil)

Figur 2    die zweite Sufe des erfindungsgemäßen zweistufigen Meßverfahrens (Refreshteil)

Dem erfindungsgemäße Verfahren liegen folgende Annahmen zugrunde:

ATM-Zellen werden dem Vermittlungssystem auf einer Verbindungsleitung in einem festen zeitlichen Rhytmus (slotted link) zugeführt. Dort wird der eigentliche Meßvorgang gestartet. Das Meßergebnus kann von anderen Algorithmen mitbenutzt werden. Die Zeit für einen Zellenzyklus auf der Verbindungsleitung wird durch eine Größe tcc repräsentiert und wird in Sekunden gemessen. Die Zellenrate wird als ganzzahlige Größe in Einheiten von RateGran Zellen pro Sekunde gemessen. Ein typischer Anwendungsfall ist gegeben, wenn RateGran = 32 ist. Die Größe RateGran ist ganzzahlig und bestimmt die Granularität der gemessenen Rate. Wenn die Größe RateGran den Wert 1 annimmt, werden die Raten in Zellen pro Sekunde gemessen.

Das Rechenverfahren benutzt für alle Verbindungen gemeinsame Variablen Tsmax, Tsnow, Timin, CellCountMax, InactiveRate, RateGran, N. Dabei bedeuten:

Die Variable TSmax ist der maximale Wert, die die Zeitvariablen annehmen können und nimmt lediglich ganzzahlige Werte an.

Die Variable TSnow gibt die aktuelle Zeit wieder und ist ein ganzzahliger Wert zwischen 0 und TSmax-1. Der Anfangswert beträgt 0 und wird nach jedem Nstep Zellenzyklus um 1 erhöht. Wenn bei diesem Vorgang der Wert von TSmax erreicht wird, wird die Variable TSnow auf 0 gesetzt. Die Variable Nstep ist eine ganzzahlige Größe.

Die Variable TImin bestimmt das minimale Zeitintervall zwischen zwei Messungen für dieselbe Verbindung, die eingehalten werden muß, wenn weniger als CellCountMax Zellen für diese Verbindung seit der letzten Messung (für diese Verbindung) angekommen sind. Die Variable TImin wird in Einheiten der Variablen tcc multipliziert mit der Variablen Nstep berechnet.

Die Variable CellCountMax ist die maximale Anzahl der Zellen pro Verbindung die zwischen 2 Messungen für dieselbe Verbindung ankommen können, ohne daß eine Ratenberechnung durchgeführt werden muß.

Die Variable InactiveRate ist die Zellenrate, unter der eine Verbindung als inaktiv betrachtet wird, und hat die Einheit RateGran Zellen pro Sekunde.

Die Variable RateGran ist ein ganzzahliger Wert wobei die Rate als ganzzahliger Wert in Einheiten von RateGran mal Zellen pro Sekunde gemessen werden soll.

Die Variable N ist in der Regel die Zahl der Zellen, die für eine Verbindung seit der letzten Messung ankommen müssen bevor der nächsten Messung gestartet wird.

Das Rechenverfahren benutzt weiterhin die verbindungsindividuelle Variablen LastTS, CellCount. Diese verbindungsindividuelle Variablen bedeuten:

Die Variable Measurement_Started ist eine Boolsche Variable, die "true" ist, wenn die Verbindung nicht inaktiv ist. Der Eingangswert beim Verbindungsaufbau ist "false".

Die Varaible LastTS ist der letzte Zellenzyklus, zu dem das Meßintervall gestartet wurde. Der Eingangswert beim Verbindungsaufbau ist nicht relevant.

Die Variable CellCount ist die Anzahl der Zellen, die seit der letzten Messung für diese Verbindung angekommen sind. Der Eingangswert beim Verbindungsaufbau ist nicht relevant.

Für jede Verbindung, die eine Ratenmessung erfordert, gibt es einen Algorithmusparametersatz. Der Algorithmus besteht aus insgesamt zwei Teilen, einem Hauptteil und einem Refreshteil.

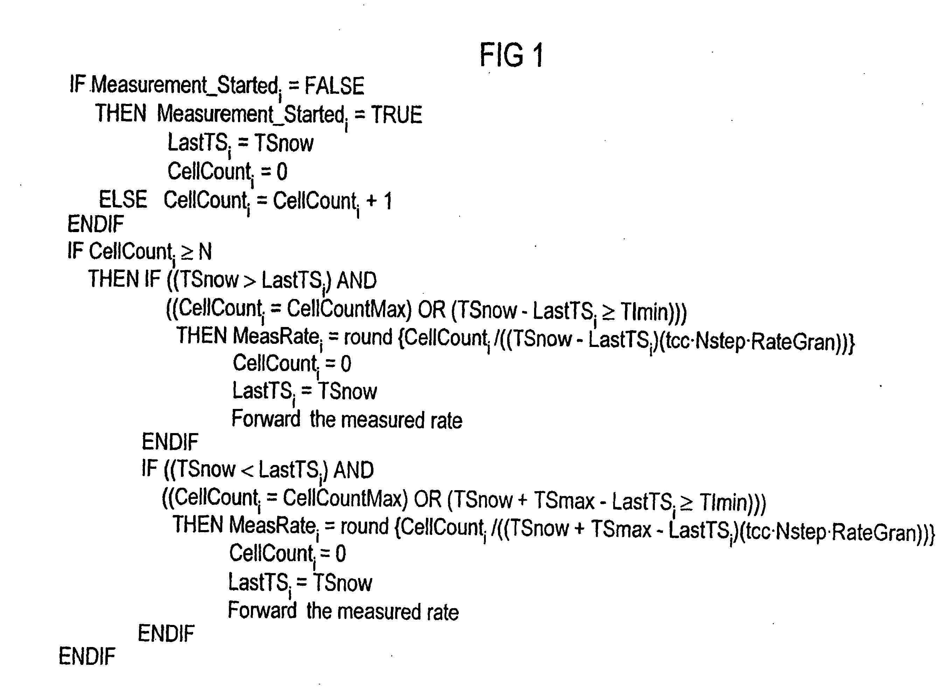

In Fig. 1 ist der Ablauf des Hauptteiles aufgezeigt. Demgemäß wird der Hauptteil bei der Ankunft einer jeden Zelle, für die eine Ratenmessung durchgeführt werden soll, gestartet. Dabei wird der Parametersatz der zugehörigen Verbindung verwendet.

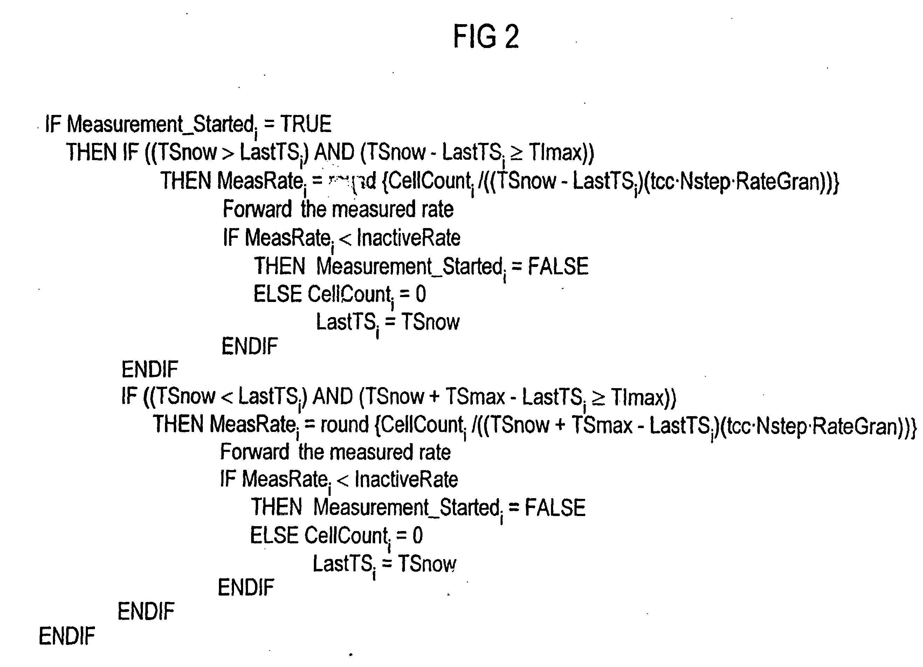

In Fig. 2 ist der Ablauf des Refreshteiles aufgezeigt. Der Refreshteil wird zyklisch für alle Verbindungen innerhalb eines Zeitintervalls T_refresh ausgeführt. Dabei ist die Variable T_refresh größer als die Variable TImin. Ebenso weist die Summe aus der Variablen TImax und der Variablen T_refresh einen kleineren Wert auf, als die Variable TSmax. Der Refresh wird benötigt um sicherzustellen, daß eine Messung für jede Verbindung stattfindet bevor TSnow für diese Verbindung den spezifischen Wert LastTS erneut erreicht. Dies kann beispielsweise passieren wenn keine ATM-Zelle für die Verbindung innerhalb eines Zeitintervalls der Länge TSmax ankommt. Der Refresh verhindert Probleme, die durch die Wahl eines endlichen Zeitintervalls entstehen (Wrap Around Problem mit der Zeitmarkierung LastTS). In einem Zellenzyklus können der Hauptteil des Algorithmusses und der Refresh Teil des Algorithmusses zusammen gesteuert werden. Allerdings kann dies nur für verschiedene Verbindungen gelten.

Wie aus Fig. 1 entnehmbar ist, werden Rundungen durch Round {x} durchgeführt. Round {x} bestimmt eine ganzzahlige Größe, die am nächsten dem Wert x ist. Ebenso wird round { n+1/2 } = n+1 für eine ganzzahlige Zahl n gesetzt. In anderen Versionen desselben Algorithmus könnte man die Round Funktion durch Runden auf den ganzzahligen Anteil einer Zahl (trunc in all places) ersetzen. Dann würde trunc {x} der größte ganzzahlige Wert bedeuten, der kleiner oder gleich der Zahl x ist.

Die Messung des Zellenzyklus ist nun wie folgt charakterisiert:

Der Algorithmus benutzt pro Verbindung eine Boolsche Variable Measurement Started. Wenn diese Variable den Wert "true" annimmt, ist damit der Beginn des Meßintervalls gewählt.Andernfalls ist dies nicht der Fall. Wenn eine Verbindung erstellt ist, wird dieser Variablen der Wert "false" zugewiesen. Sie wird auf "false" gesetzt, wenn eine Messung ergeben hat, daß die Verbindung inaktiv geworden ist.

Wenn eine ATM-Zelle ankommt und die Variable Measurement_ Started für die betreffende Verbindung auf "false" gesetzt wurde (dies ist beispielsweise der Fall, wenn die erste ATM-Zelle einer Verbindung ankommt oder wenn die erste ATM-Zelle einer Verbindung nach einer langen inaktiven Zeit (idle time) für diese Verbindung ankommt), wird die Messung gestartet, indem der Beginn des Meßintervalls LastTS = Tsnow gesetzt wird und indem die Variable CellCount für diese Verbindung auf 0 gesetzt wird.

Wenn eine ATM-Zelle ankommt und die Variable Measurements_ Started auf "true" gesetzt wird, dann wird die Variable CellCount für diese Verbindung um 1 erhöht.

wenn eine ATM-Zelle für eine bestimmte Verbindung ankommt, wird eine Berechnung der zu messenden Rate MeasRate für diese Verbindung durchgeführt wenn gilt:

Wenigstens N Zellen für die Verbindung sind seit Beginn der Messung angekommen und die Variable CellCount für die Verbindung ist gleich der Variablen CellCountMax oder die Variable TSnow ist um wenigstens den Wert TImin seit Beginn der Messung erhöht worden. Dies bedeutet, daß die Variable TSnow um wenigstens die Variable TImin erhöht wurde seitdem die Messung für diese Verbindung gestartet wurde. Dies bedeutet ferner, daß ungefähr die Zeit Timin • tcc • Nstep vergangen ist, seitdem die Messung gestartet wurde.

Wenn eine Berechnung der gemessenen Rate für eine Verbindung i durchgeführt werden soll, erfolgt dies dadurch, daß folgendes gilt:

$$\text{MeasRate}_i = \text{round } \{\text{CellCount}_i / ((\text{TSnow} - \text{LastTS}_i). (\text{tcc} \bullet \text{Nstep} \bullet \text{RateGran}))\} \text{ oder}$$

$$\text{MeasRate}_i = \text{round } \{\text{CellCount}_i / ((\text{TSnow} + \text{TSmax} - \text{LastTS}_i) (\text{tcc} \bullet \text{Nstep} \bullet \text{RateGran}))\}.$$

Die erste Zeile wird benutzt, wenn der Kalender nicht gewrapped wurde seit die Messung gestartet wurde bei $\text{LastTS}_i$ was bedeutet, daß TSnow > $\text{LastTS}_i$ ist.

Die zweite Zeile wird benutzt, wenn der Kalender gewrapped wurde seitdem die Messung gestartet wurde, was bedeutet, daß TSnow < $\text{LastTS}_i$. Die Einheit der berechneten Größe ist RateGran Zellen pro Sekunde.

Der Refresh Teil des Algorithmuses wird für alle Verbindungen innerhalb eines Zeitintervalls T_refresh in Einheiten von tcc

- Nstep zyklisch durchgeführt. Der Refreshteil wird nicht für eine Verbindung in einem Zellenzyklen durchgeführt, für den eine Zelle für dieselbe Verbindung ankommt. Die Summe der Variablen TImax und T_refresh ist kleiner als die Variable TSmax. Der Refreshteil wird nur für Verbindungen durchgeführt, für die eine Messung gestartet

EP 1 031 214 B1

worden ist.

Wenn ein Refresh für eine Verbindung berechnet wird, wird die Berechnung der gemessenen Größe Meas-Rate für die Verbindung erst dann durchgeführt, wenn die Variable TSnow um wenigstens TImax seit Beginn der Messung für diese Verbindung erhöht wurde. Dies bedeutet, daß seit Beginn der Verbindung wenigstens das Zeitintervall TImax • tcc • Nstep verstrichen sein muß.

Wenn durch den Refreshteil eine gemessene Rate berechnet wurde und wenn die gemessene Rate unterhalb eines Wertes InactivRate liegt, dann wird die Verbindung als inaktiv betrachtet und die Variable Measurement_Startet wird für diese Verbindung auf "false" gesetzt. Dies bedeutet daß die nächste Messung für diese Verbindung erst beim Ankommen der nächsten ATM Zelle für diese Verbindung gestartet wird.

Wenn eine durch den Refreshteil gemessene Rate für die Verbindung i berechnet wurde und diese gemessene Rate nicht unterhalb des Wertes der Variable InactiveRate ist, dann wird diese Verbindung als aktiv betrachtet. Die nächste Messung wird sofort gestartet, indem gesetzt wird: $CellCount_i = 0$ und $LastTs_i = TSnow$.

Der Algorithmus erlaubt ferner einen Kompomiß (trade-off in terms) im Hinblick auf die Genauigkeit der Messung gegen eine Speicherreduktion für die Zeitvariablen. Dies wird durch eine geeignete Wahl der Variablen Nstep erreicht. Je größer die Variable Nstep ist, umso kleiner ist die Variable TSmax und dazwischen ist der Bereich der Variablen TSnow zu wählen. Allerdings wird für große Werte von Nstep die Messung weniger genau. Im Umkehrschluß gilt, daß im Falle, wenn Nstep = 1 ist, die Messung am genauesten wird, allerdings ist hier der Speicherbedarf am größten.

Letztendlich sei angemerkt, daß im Falle, daß die zu messende Rate als eine Real variable in Zellen pro Sekunde gemessen wird, der Algorithmus zu modifizieren ist. In diesem Fall wird die Variable RateGran auf 1 gesetzt und die trunc Funktion weggelassen.

**Patentansprüche**

1. Verfahren zum Messen von ATM-Zellraten, mit einem Vermittlungssystem, in dem die Häufigkeit ankommender ATM-Zellen verbindungsindividuell durch ein Meßverfahren erfaßt wird,
   **dadurch gekennzeichnet,**
   **daß** ein zweistufiges Meßverfahren vorgesehen ist,
   **daß** bei Eintreffen einer Mehrzahl von ATM-Zellen das Meßverfahren erst dann gestartet wird, wenn ein vorgegebener Schwellenwert (N) überschritten ist,
   **daß** die erste Stufe des zweistufigen Meßverfahrens nach Maßgabe eines zeitlichen Schwellenwertes (TImin) oder eines für die Häufigkeit der ATM-Zellen repräsentativen Schwellenwertes (CellCountMax) gestartet wird, und
   **daß** die zweite Stufe des zweistufigen Meßverfahrens erst dann gestartet wird, wenn eine vorgegebenen Zeitspanne (TImax) überschritten ist.

2. Verfahren nach Anspruch 1,
   **dadurch gekennzeichnet,**
   **daß** der für die Häufigkeit der ATM-Zellen repräsentative Schwellenwert (CellCountMax) die maximale Anzahl der Zellen pro Verbindung wiedergibt, die zwischen 2 Messungen für dieselbe Verbindung ankommen können, ohne daß eine Ratenberechnung durchgeführt werden muß.

3. Verfahren nach Anspruch 1, 2,
   **dadurch gekennzeichnet,**
   **daß** der zeitliche Schwellenwert (TImin) als der Wert zwischen 2 Messungen für dieselbe Verbindung definiert ist, der eingehalten werden muß, wenn weniger Zellen als der für die Häufigkeit der ATM-Zellen repräsentative Schwellenwert (CellCountMax) für diese Verbindung seit der letzten Messung angekommen sind.

4. Verfahren nach nach einem der vorstehenden Ansprüche,
   **dadurch gekennzeichnet,**
   **daß** eine Messung für eine Verbindung gegebenenfalls vor Erreichen einer fest vorgegeben Anzahl von ATM-Zellen (CellCountMax) und/ oder vor Erreichen einer vorgegebenen Zeitspanne gestartet wird, wenn seit Beginn der Messung für diese Verbindung eine vorgegebene Anzahl (N) von ATM-Zellen eingetroffen sind und zugleich mindestens eine vorgegebene Zeitspanne (TImin) verstrichen ist.

5. Verfahren nach einem der vorstehenden Ansprüche,
   **dadurch gekennzeichnet,**

4

**daß** nach einer inaktiven Phase das nächste Meßintervall erst mit Ankunft der ersten ATM-Zelle wieder neu begonnen wird.

**Claims**

1. Method for measuring ATM cell rates, having a switching system in which the frequency of incoming ATM cells is detected on a line-specific basis by means of a measuring method, **characterized in that** a two-stage measuring method is provided, **in that**, when a multiplicity of ATM cells is received, the measuring method is not started until a predefined threshold value (N) is exceeded, **in that** the first stage of the two-stage measuring method is started in accordance with a time threshold value (TImin) or a threshold value (CellCountMax) which is representative of the frequency of the ATM cells, and **in that** the second stage of the two-stage measuring method is not started until a predefined time period (TImax) is exceeded.

2. Method according to Claim 1, **characterized in that** the threshold value (CellCountMax) which is representative of the frequency of the ATM cells represents the maximum number of cells per line which can arrive between two measurements for the same line without a rate calculation having to be carried out.

3. Method according to Claim 1, 2, **characterized in that** the time threshold value (TImin) is defined as that value between two measurements for the same line which has to be complied with if fewer cells than the threshold value (CellCountMax), which is representative of the frequency of the ATM cells, for this line have arrived since the last measurement.

4. Method according to one of the preceding claims, **characterized in that** a measurement for a line is started, if appropriate, before a permanently predefined number of ATM cells (CellCountMax) is reached and/or before a predefined time period has expired if a predefined number (N) of ATM cells have been received since the start of the measurement for this line and at the same time at least a predefined time period (TImin) has expired.

5. Method according to one of the preceding claims, **characterized in that** after an inactive phase, the next measuring interval is not restarted until the arrival of the first ATM cell.

**Revendications**

1. Procédé de mesure de débit de cellules ATM, comportant un système de commutation, dans lequel la fréquence de cellules ATM qui arrive est déterminée de manière propre à une liaison par un procédé de mesure,
     **caractérisé**

     **en ce qu'**il est prévu un procédé de mesure en deux étapes,
     **en ce que**, à l'arrivée d'une pluralité de cellules ATM, le procédé de mesure n'est démarré que si l'on est au-dessus d'une valeur (N) seuil prescrite,
     **en ce que** la première étape du procédé de mesure en deux étapes est démarrée en fonction d'une valeur (TImin) seuil de temps ou d'une valeur (CellCountMax) seuil représentative de la fréquence des cellules ATM, et
     **en ce que** la deuxième étape du procédé de mesure en deux étapes n'est démarrée que si l'on est au-dessus d'un laps (TImax) de temps prescrit.

2. Procédé suivant la revendication 1,
     **caractérisé**
     **en ce que** la valeur (CellCountMax) seuil représentative de la fréquence des cellules ATM reproduit le nombre maximum des cellules par liaison qui peuvent arriver entre deux mesures pour la même liaison sans qu'un calcul de débit doive être effectué.

3. Procédé suivant la revendication 1, 2,
     **caractérisé**
     **en ce que** la valeur (TImin) seuil de temps est définie comme la valeur entre deux mesures pour la même liaison, valeur qui doit être respectée si moins de cellules que la valeur (CellCountMax) seuil représentative de la fréquence des cellules ATM sont arrivées pour cette liaison depuis la dernière mesure.

4. Procédé suivant l'une des revendications précédentes,
**caractérisé**
**en ce qu'**une mesure pour une liaison est démarrée le cas échéant avant qu'un nombre prescrit de manière fixe de cellules ATM (CellCountMax) et/ou avant qu'un laps de temps prescrit ne soit atteint si, depuis le début de la mesure pour cette liaison, un nombre (N) prescrit de cellules ATM est arrivé et il s'est écoulé en même temps au moins un laps (Tlmin) de temps prescrit.

5. Procédé suivant l'une des revendications précédentes,
**caractérisé**
**en ce que**, après une phase inactive, le prochain intervalle de mesure n'est recommencé à nouveau qu'à l'arrivée de la première cellule ATM.

# FIG 1

```
IF Measurement_Started_i = FALSE
    THEN  Measurement_Started_i = TRUE
            LastTS_i = TSnow
            CellCount_i = 0
    ELSE   CellCount_i = CellCount_i + 1
ENDIF
IF CellCount_i ≥ N
    THEN IF ((TSnow > LastTS_i) AND
            ((CellCount_i = CellCountMax) OR (TSnow - LastTS_i ≥ TImin)))
                THEN MeasRate_i = round {CellCount_i /((TSnow - LastTS_i)(tcc·Nstep·RateGran))}
                    CellCount_i = 0
                    LastTS_i = TSnow
                    Forward the measured rate
        ENDIF
        IF ((TSnow < LastTS_i) AND
            ((CellCount_i = CellCountMax) OR (TSnow + TSmax - LastTS_i ≥ TImin)))
                THEN MeasRate_i = round {CellCount_i /((TSnow + TSmax - LastTS_i)(tcc·Nstep·RateGran))}
                    CellCount_i = 0
                    LastTS_i = TSnow
                    Forward the measured rate
        ENDIF
ENDIF
```

EP 1 031 214 B1

# FIG 2

```
IF Measurement_Started_i = TRUE
    THEN IF ((TSnow > LastTS_i) AND (TSnow - LastTS_i ≥ TImax))
            THEN MeasRate_i = round {CellCount_i /((TSnow - LastTS_i)(tcc·Nstep·RateGran))}
                Forward the measured rate
                IF MeasRate_i < InactiveRate
                    THEN Measurement_Started_i = FALSE
                    ELSE CellCount_i = 0
                            LastTS_i = TSnow
                ENDIF
    ENDIF
    IF ((TSnow < LastTS_i) AND (TSnow + TSmax - LastTS_i ≥ TImax))
        THEN MeasRate_i = round {CellCount_i /((TSnow + TSmax - LastTS_i)(tcc·Nstep·RateGran))}
                Forward the measured rate
                IF MeasRate_i < InactiveRate
                    THEN Measurement_Started_i = FALSE
                    ELSE CellCount_i = 0
                            LastTS_i = TSnow
                ENDIF
    ENDIF
ENDIF
```

EP 1 031 214 B1